# EUROPEAN PATENT SPECIFICATION

(11) **EP 4 371 225 B1**
(45) Date of publication and mention of the grant of the patent: **06.08.2025**
(21) Application number: 22741186.5
(22) Date of filing: 27.06.2022
(51) Int. Cl.: H02M 1/00, H02M 3/156, H05B 45/375, H05B 45/3725, H05B 45/345

(54) **SWITCH MODE POWER CONVERTER**
GETAKTETER STROMWANDLER
CONVERTISSEUR DE PUISSANCE À MODE COMMUTÉ

(30) Priority: 14.07.2021 WO PCT/CN2021/106351; 07.09.2021 EP 21195328
(43) Date of publication of application: 22.05.2024
(73) Proprietor: Signify Holding B.V., 5656 AE Eindhoven (NL)
(72) Inventor: ZHANG, Hui, 5656 AE Eindhoven (NL); ZHOU, Yufei, 5656 AE Eindhoven (NL); WU, Jianliang, 5656 AE Eindhoven (NL)
(74) Representative: Verweij, Petronella Daniëlle
(86) International application number: PCT/EP2022/067574
(87) International publication number: WO 2023/285124

(56) References cited:
- CN-A- 104 427 716
- CN-A- 111 954 342
- US-A1- 2012 262 082
- US-B1- 9 237 621

## Description

### FIELD OF THE INVENTION

This invention relates to switch mode power converters, an in particular switch mode power converters which allow setting of the output current level.

### BACKGROUND OF THE INVENTION

Lighting drivers commonly use switch mode power converters for delivering current to a lighting load. It is desirable to be able to control the current level, for example in order to implement dimming control.

In a switch mode power supply, the load is often needed to be connected to the ground potential. To satisfy this requirement, for some topologies of the switch mode power converter, the main power switch has to be placed at the high voltage potential. This is often called high side switching. It is desirable however to implement the current control circuit with low voltage components as well as a low voltage control signal, wherein the term "low voltage" means that it is referred to ground potential. For example, in a non-isolated LED driver, such as a cascaded boost converter and high side buck converter topology, the current setting control is used to set the output current of the high side buck stage, but it is required to set the output current with a low voltage current setting signal. This requires this low voltage current setting control signal to be converted to a high voltage side of the converter for control of the high (voltage) side power switch (e.g. MOS power transistor).

It is known to use a high voltage level shift IC for this purpose, but this is a relatively expensive circuit. It is also known to use wireless near field communication to transfer a setting signal to the high voltage side circuit. This is also an expensive circuit option.

There is therefore a need for a low voltage control signal and a low cost solution for providing communication between the low voltage control signal and a high voltage side control circuit of a switch mode power converter.

CN104427716A discloses level shifter circuits formed by transformer, or opto-coupler, and proposes a circuit to transmit dimming signal to the high side controller when main power switch is off. CN111954342A discloses a logic level shifter to shift a grounded PWM signal to another PWM signal for a high side drive control circuit. US20120262082A1 discloses using a transistor between high side and ground to convert a high side current signal into a grounded signal for a grounded timer circuit.

### SUMMARY OF THE INVENTION

The invention is defined by the claims.

It is a concept of the invention to provide a switch mode power converter with two sensing components. A current sensing resistor is in series with the main power switch of the converter to detect a power flowing through a main energy storage component of the converter. This is used for feedback of the delivered power and for control of the timing of the high frequency switching of the main power switch. A second sensing component is a biasing resistor connected in series between the high voltage side and the reference voltage potential to the converter. A current source circuit sets a current through the biasing resistor based on a current setting control signal which is also referred to the reference voltage potential. Since both the biasing resistor and the current setting control signal are referred to the reference voltage potential, there is no difficulty in controlling the current through the biasing resistor, e.g. without using a level shifter. The main power switch is controlled based on sensing the voltage across the current sensing resistor as well as the biasing resistor. Thus, a bias voltage is generated using a low voltage current setting signal and it is sensed by a high voltage side control circuit of the power switch. This provides a low cost way to provide communication between the low voltage side control signal and high voltage side control circuit.

According to examples in accordance with the invention, there is provided a switch mode power converter according to claim 1.

This switch mode power converter has a current setting circuit which receives a current setting control signal, and transfers this to a control circuit of the main power switch. The current setting circuit is for example a low voltage control circuit (e.g. 5V supply voltage and referenced to ground) whereas the control circuit is a higher voltage side circuit for providing high voltage control signals to the main power switch (e.g. of the order of 400V). The power converter transfers the control signal from the relatively low voltage area to the relatively high voltage area by generating a bias current between the high potential and the reference (ground) which is superimposed on a current through the first (high side) sensing component. The bias current and current sensed by the current sensing resistor are measured by the high voltage control circuit. Since the biasing component is coupled to the reference potential and the current setting signal is also referred to the reference potential, they are co-grounded and it is easy to set a current through the biasing component using the current setting signal, without using a level shifter or opto-coupler.

The control circuit controls the power switch based on a sensed current in series with the main power switch (so enabling real-time control based on current sensing) as well as based on a sensed current source current (so also enabling control based on the current setting).

This enables a very low cost circuit for transferring current setting information from the voltage side to the high voltage side main control circuit.

In an embodiment, a current sense terminal of the control circuit is connected to a high potential end of the series connection.

Thus, only one current level needs to be sensed. It has a DC component which is based on the current setting and a variable component which is the dynamic feedback control signal.

The biasing resistor is connected to the junction between the current sensing resistor and the energy storage component.

One of the pair of output terminals is preferably connected to the reference voltage potential. Thus, there is a common reference (ground) to the high voltage and low voltage parts of the circuit.

The current source circuit and the biasing resistor for example define a current path, wherein the current source circuit comprises a control transistor for controlling a current in the current path such that the biasing resistor is adapted to generate a bias voltage proportional to the current and add the bias voltage to a voltage across the current sensing resistor, to result in a voltage to be sensed by the control circuit. The bias voltage represents the current setting and the voltage across the current sensing resistor is the feedback control signal.

The biasing resistor may be connected to a node coupled to the high potential voltage but with variable voltage amplitude, and the current source circuit comprises a low pass filter connected to a current flow-in terminal of the control transistor to stabilize a voltage amplitude of the control transistor.

This filters out the high frequency switching of the main switch (which creates the variable amplitude) so that the current source circuit can be controlled more stably as a constant current source, providing a DC bias on top of the high frequency current feedback signal.

The control transistor may comprise a high voltage switch. Alternatively, the current path may further comprise a voltage threshold component and the control transistor comprises a low voltage switch (relative to the alternative high voltage switch).

Thus, the control transistor may allow a high voltage difference across its terminals or else a voltage threshold component is used to enable a voltage step so that the current source can be implemented with lower voltage components, in particular the control transistor.

The voltage threshold component may comprise a Zener diode and the control transistor is a low voltage MOSFET as the low voltage switch.

The current setting circuit may comprise a buffer with an output storage capacitor for storing a control voltage for the control transistor, wherein a positive input of the buffer is adapted to receive the current setting control signal and a negative input of the buffer is connected to a second current sensing component in the current path for sensing the current therethrough.

The energy storage component for example comprises an inductor.

For a high-side switch buck converter, the inductor is in series with the current sensing resistor between the main switch and one of the output terminals. The current sensing resistor is adapted to detect a peak current flowing through the inductor in a charging phase of the buck converter. A diode is provided between the reference voltage potential and an output of the main power switch. These are well known design features of a buck converter architecture.

For a high-side switch buck-boost converter, the inductor is coupled to the main power switch and the reference voltage potential, a positive output terminal is coupled to the reference voltage potential and a negative output terminal is coupled to the main power switch via the current sensing resistor. The current sensing resistor is in this case adapted to detect a freewheeling current flowing to the load in a freewheeling phase of the buck-boost converter.

The invention also provides a non-isolated LED driver comprising:
a boost converter; and
a high-side switch buck converter defined above cascaded to the boost converter.

The invention also provides a lighting unit comprising:
a non-isolated LED driver defined above; and
a LED arrangement connected to the pair of output terminals.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a buck converter architecture in which an opto-coupler is used to pass a current setting signal from a low voltage circuit to a high voltage control circuit;
Fig. 2 shows a buck converter architecture in which a near field communication is used to pass a current setting signal from a low voltage circuit to a high voltage control circuit;
Fig. 3 shows a first example of a switch mode power converter in accordance with the invention;
Fig. 4 shows the additional use of a voltage threshold component to enable a low voltage switch; and
Fig. 5 shows a second example of a switch mode power converter in accordance with the invention; and
Fig. 6 shows a non-isolated LED driver comprising a boost converter and the high-side switch buck converter supplying a LED arrangement.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention, which is only limited by the scope of the claims.

These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a switch mode power converter input terminals to receive high voltage input power and output terminals to provide output power. The converter has a main power switch, a current sensing resistor and an energy storage component. A current setting circuit is used to control a current source circuit to drive a through a biasing resistor connected between the high voltage input and a reference voltage potential. The power switch is controlled based on sensing a voltage across the current sensing resistor and the biasing resistor.

As mentioned above, one known solution for transferring a current setting signal from a low voltage circuit to a high voltage control circuit of the main power switch is to use an opto-coupler.

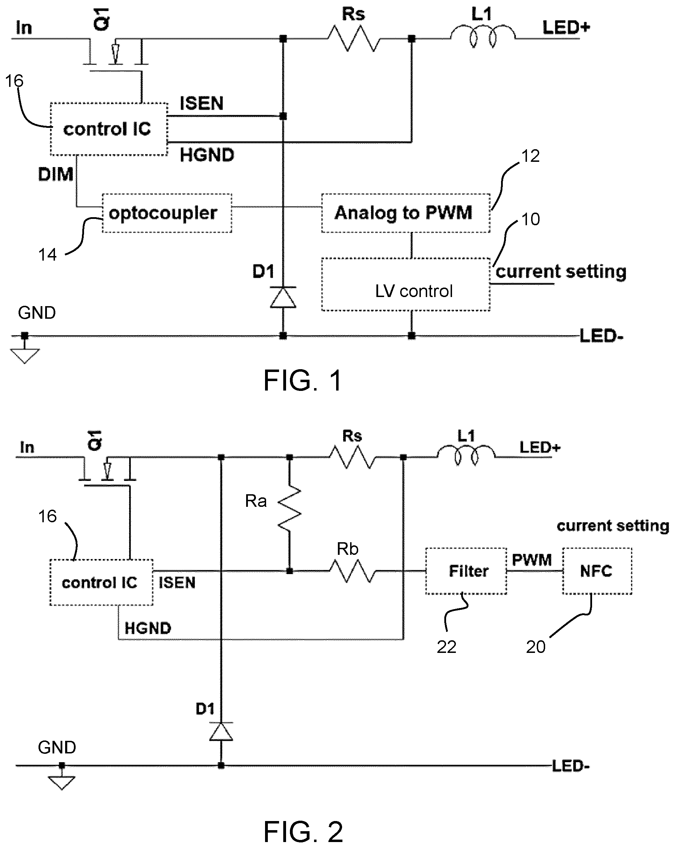

Figure 1 shows this approach. It shows a buck converter architecture having a pair of input terminals to receive input power with a high voltage potential In and a reference voltage potential GND. A pair of output terminals LED+, LED- provide output power to a LED lighting load.

The buck converter architecture is standard and comprises a main power switch Q1 in series with a current sense resistor Rs and an inductor L1 (energy storage component) between the high voltage potential input In and output LED+. The main power switch Q1 alternately couples and decouples the inductor L1 to and from the high voltage potential In. A diode D1 provides the current path to the output through the inductor L1 when the main power switch Q1 is off.

An analog (such as 0-10V dimming voltage) or digital (such as DALI) low voltage current setting signal is received by a low voltage control circuit 10. A converter circuit 12 converts the signal to a PWM signal which is used to drive an opto-coupler 14. The output signal from the opto-coupler 14 is received by the main high voltage control circuit 16 of the main power switch Q1. This high voltage control circuit has a DIM pin used to set the current level.

The peak voltage input is for example 410 V (dc). The control IC 16 senses a voltage across the sensing resistor Rs, and the HGND terminal of the control IC is also a high voltage and is floating from the reference voltage potential GND. Thus, the HGND voltage at one side of the current sense resistor can also be as high as around 410V amplitude. This means the control IC needs to work in a high voltage range. For this reason the low voltage current setting circuit cannot directly apply a signal to the control IC. Thus the current setting signal coming from the low voltage side is transferred to the high voltage side by the opto-coupler. This circuit has problem of the additional cost of the analog to PWM converter 12 and the opto-coupler 14.

As also mentioned above, another known solution for transferring a current setting signal from a low voltage circuit to a high voltage control circuit of the main power switch is to use wireless communication such as near field communication as shown in Figure 2.

Figure 2 again shows a buck converter with main power switch Q1, current sense resistor Rs, inductor L1 and diode D1.

The current setting circuit includes a NFC circuit 20 which generates a PWM output signal. A filter circuit 22 converts this PWM signal to a DC voltage level. This generates a bias voltage by means of a resistor divider Ra, Rb. The voltage at the current sense input of the high voltage control circuit 16 is no longer only the voltage across the current sense resistor Rs, but includes a component resulting from the voltage divider Ra, Rb between the main power switch Q1 and the DC current setting voltage. By suitably interpreting the current sense signal ISEN, the output current can be set independently.

However, this circuit has the additional cost of the wireless communications circuity.

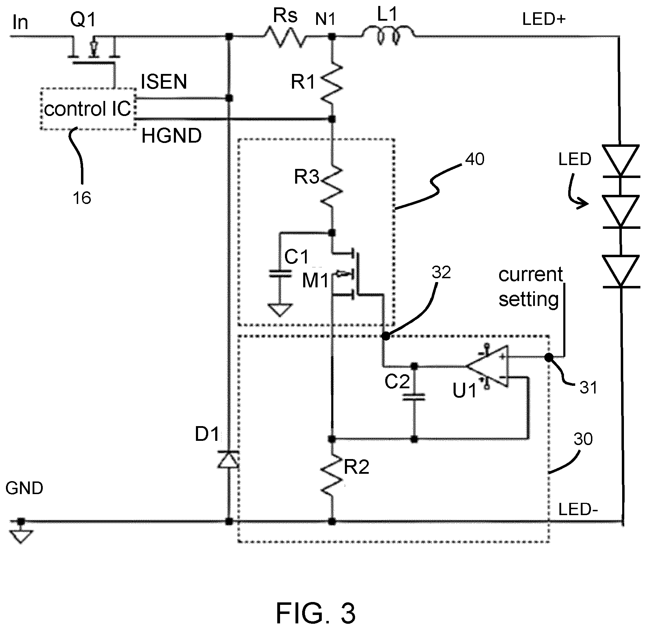

Figure 3 shows an example of a switch mode power converter in accordance with the invention. It shows a buck converter architecture, in particular a high side switch buck converter, for the purposes of explanation only.

As for the buck converter architecture of Figures 1 and 2, the circuit has a pair of input terminals to receive input power with a high voltage potential In and a reference voltage potential GND and a pair of output terminals LED+, LED- to provide output power to a lighting load LED. The buck converter comprises the main power switch Q1, a (first) current sensing component Rs and the energy storage inductor L1 in series between the high voltage input In and the positive output LED+.

The converter additionally comprises a low voltage (e.g. 5V supply) current setting circuit 30 having an input 31 for receiving a current setting control signal ("current setting") which is referred to the reference voltage potential GND.

An output 32 of the current setting circuit 30 is provided to a current source circuit 40. The output of the current setting circuit 30 is a control voltage for the current source circuit 40. The current source circuit 40 generates a current which depends on the current setting control signal. This current passes along a current path between the high voltage input In and the reference potential. In particular, the current path extends between (i) a node N1 between the first current sense resistor Rs and the inductor L1 and (ii) the reference potential GND. The current path comprises a biasing resistor R1, the current source circuit 40 itself, and a second current sense resistor R2 discussed below. It is noted that the current path, on the high voltage side, can connect to other possible points; and on the reference potential side, can also connect to other possible points.

The current source circuit 40 comprises a control transistor M1 for controlling a current in the current path and a filter comprising a filter resistor R3 and a filter capacitor C1. The current path includes the filter resistor R3 and the transistor M1 (i.e. the drain and source of the transistor M1 are connected along the current path). The biasing resistor R1 generates a bias voltage across its two terminals that is proportional to the current flowing.

The filter R3, C1 is a low pass filter, and it is connected to a current flow-in terminal (the drain in this example) of the control transistor M1. It stabilizes the voltage amplitude of the drain of the control transistor M1 by filtering out the high frequency switching of the main switch Q1. The current source circuit thus functions as a constant current source, providing a DC bias on top of the high frequency current feedback signal.

The current setting circuit 30 comprises a buffer U1 which receives the current setting input at its positive input and has its negative input connected to the ground reference through a second current sense resistor R2.

Thus, the buffer U1 compares the current setting with a measurement of the actual current flowing, so that a feedback loop is implemented. When the current flowing has stabilized to correspond to the current setting, the corresponding gate-source voltage for the control transistor M1 of the current source circuit 40 is stored on an output storage capacitor C2, thereby providing analog current control with regulation using negative feedback.

The current is set at I=Vcurrent_setting/R2.

The sensing biasing resistor R1 builds a voltage across it proportional to the current regulated by the current source circuit.

The high voltage control circuit 16 for the main power switch Q1 senses a combined voltage across the first current sense resistor Rs and the biasing resistor R1. Thus, the bias voltage across the biasing resistor R1 is added to a voltage across the current sensing resistor Rs to result in a voltage to be sensed by the control circuit 16. The bias voltage represents the current setting whereas the voltage across the current sensing resistor is a feedback control signal for controlling the timing of the high frequency switching of the main power switch Q1. Therefore, as a whole, the control IC 16 takes the current setting as a part of the feedback control signal for controlling the timing of the high frequency switching of the main power switch Q1, and the real power that goes through the sensing resistor Rs is biased by the current setting thus can be adjusted by the current setting.

The current setting circuit 30 thus receives a current setting control signal "current setting", and transfers this to the control circuit 16 of the main power switch by generating a bias current between the high potential (at node N1) and the reference (ground) which is superimposed on a current through the first (high side) sensing component Rs. The bias current and current sensed by the current sensing resistor Rs are measured by the high voltage control circuit 16.

The biasing resistor R1 is coupled to the reference potential GND and the current setting signal is also referred to the reference potential. This common ground potential means it is easy to set a current through the biasing resistor R1 by the current setting signal. More specifically, the current setting circuit 30 can drive the current source circuit 40 directly since they are co-grounded.

The timing of operation of the power switch Q1 is controlled based on the sensed current in series with the main power switch. This enables real-time control of the high frequency switching based on current sensing feedback. However the sensed current generated by the current source current, which is constant at the timeframe of the high speed switching, enables control based on the current setting. Only one current level is sensed, with a DC component which is based on the current setting and a variable component which is the dynamic feedback control signal.

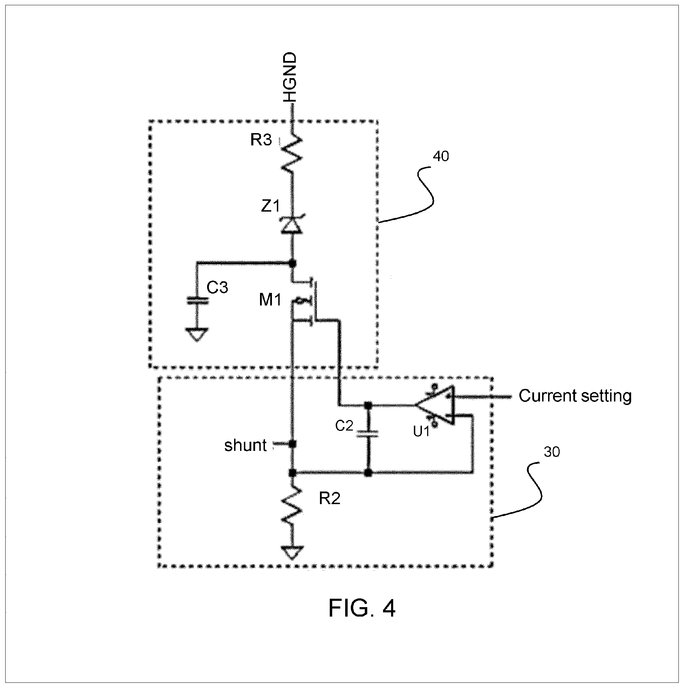

The control transistor M1 of the current source may comprise a high voltage switch since it may experience a high voltage between the high voltage potential In and the reference voltage potential GND, but as discussed above, driving the high voltage switch is still referred to ground making the drive scheme easy to implement. In an alternative embodiment, as shown in Figure 4, the current source circuit 40 may also add a voltage threshold component Z1 to the current path, such as a Zener diode. The Zener diode in this case clamps a voltage across the Zener diode and enables a voltage step so that the current source can be implemented with low voltage components, in particular the control transistor M1. For example, the control transistor M1 may comprise a relatively low voltage switch (e.g. a 60V MOSFET).

The example above is a buck converter. In the buck converter, the current sensing resistor Rs detects a peak current flowing through the inductor L1 in a charging phase of the buck converter. The invention may however be applied to other converter topologies.

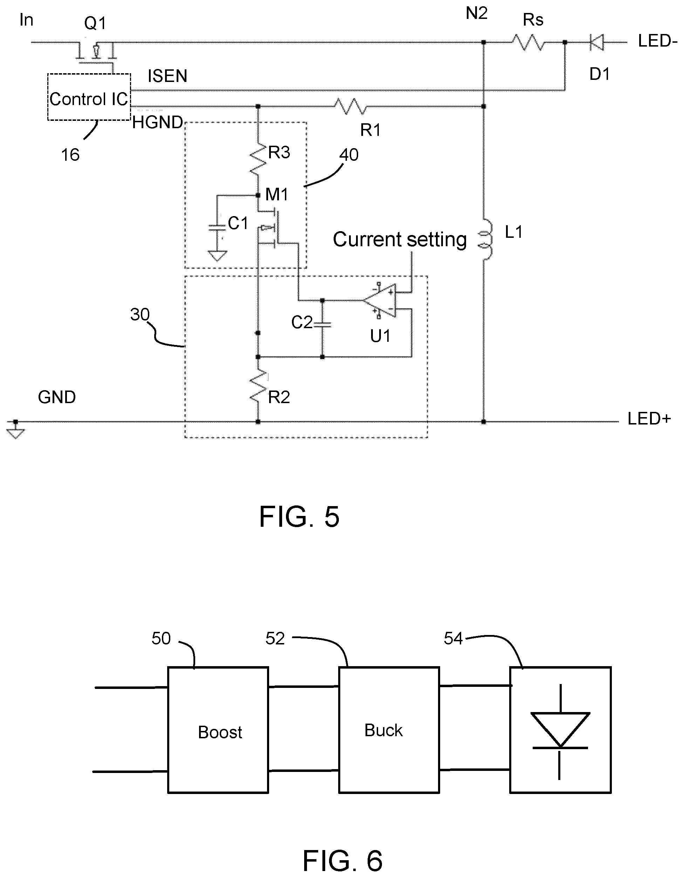

Figure 5 shows a buck-boost circuit. The same components are used as in the buck converter circuit of Figure 3 and they are given the same references. In this case, the inductor L1 is between a high voltage side node N2 (between the main power switch Q1 and the current sensing resistor Rs) and ground, and the diode D1 is in series with the output LED-.

In this circuit, the output terminals LED+ and LED- are inverted, so that the positive output terminal LED+ is ground.

The current path again comprises the biasing resistor R1, the current source circuit 40 (which is the same as in Figure 3) and the second sensing component R2. The current setting circuit 30 is also the same as in Figure 3. The current path is in parallel with the inductor L1. The main control circuit 16 again senses the voltage across the series combination of the current sensing resistor Rs and the biasing resistor R1.

For the high-side switch buck-boost converter, the current sensing resistor Rs detects a freewheeling current flowing to the load in a freewheeling phase of the buck-boost converter. Similar as the embodiment in figure 3, the current source circuit conducts a current corresponding to the current setting through biasing resistor R1, and the control circuit's input of the voltage of the sensing component Rs is biased by/added with the voltage on the biasing resistor R1, thus the real output to the LED and the sensing component Rs is adjusted.

Thus, Figure 5 shows that the arrangement of the invention may be applied to different circuit topologies.

Figure 6 shows a non-isolated LED driver comprising a boost converter 50 as a first PFC stage and the high-side switch buck converter 52 as described above cascaded to the boost converter, as a second stage. A lighting unit is formed by connecting a LED arrangement 54 to the output terminals of the driver.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A switch mode power converter comprising:
a pair of input terminals (In, GND) to receive input power with a high voltage potential (In) and a reference voltage potential (GND);
a pair of output terminals (LED+, LED-) to provide output power;
an energy storage component (L1);
a main power switch (Q1) connected to the high voltage potential (In) and the energy storage component (L1) and adapted to alternately couple and decouple the energy storage component to and from the high voltage potential;
a current sensing resistor (Rs) to detect a converted current;
a current setting circuit (30) having an input for receiving a current setting control signal referred to the reference voltage potential, the current setting circuit (30) being configured to generate an output signal which depends on the current setting control signal;
a biasing resistor (R1) having a first end connected to a node (N1, N2) between the main power switch (Q1) and the energy storage component (L1);
a current source circuit (40) coupled between the second end of the biasing resistor (R1) and the reference voltage potential (GND) configured to drive a current, which depends on the output signal of the current setting circuit (30), through the biasing resistor (R1) to the reference voltage potential (GND); and
a control circuit (16) configured to sense a voltage across a series connection of the current sensing resistor (Rs) and the biasing resistor (R1) and to control the power switch (Q1) accordingly, wherein said control circuit (16) has a high ground terminal (HGND) connected to a low potential end of the series connection, which corresponds to the second end of the biasing resistor (R1).

2. The converter of claim 1, wherein a current sense terminal (ISEN) of the control circuit (16) is connected to a high potential end of the series connection.

3. The converter of claim 1 or 2, wherein the biasing resistor (R1) is connected to the junction between the current sensing resistor (Rs) and the energy storage component (L1).

4. The converter of any one of claims 1 to 3, wherein one of the pair of output terminals (LED-) is connected to the reference voltage potential (GND).

5. The converter of any one of claims 1 to 4, wherein the current source circuit (40) and the biasing resistor (R1) define a current path (R1, R3, M1), wherein the current source circuit comprises a control transistor (M1) for controlling a current in the current path such that the biasing resistor (R1) is adapted to generate a bias voltage proportional to the current and add the bias voltage to a voltage across the current sensing resistor (Rs) to result in a voltage to be sensed by the control circuit (16), wherein the bias voltage represents the current setting and the voltage across the current sensing resistor (Rs) is a feedback control signal.

6. The converter of claim 5, wherein the biasing resistor (R1) is connected to a node coupled to the high potential voltage but with a variable voltage amplitude, and the current source circuit (40) comprises a low pass filter (R3, C1) connected to a current flow-in terminal of the control transistor (M1) to stabilize a voltage amplitude of the control transistor.

7. The converter of claim 5 or 6, wherein:
the control transistor comprises a high voltage switch; or
the current path further comprises a voltage threshold component (Z1) and the control transistor comprises a low voltage switch relative to the high voltage switch.

8. The converter of claim 7, wherein the voltage threshold component comprises a Zener diode (Z 1) and the control transistor is a low voltage MOSEFET as the low voltage switch.

9. The converter of any one of claims 5 to 8, wherein the current setting circuit comprises a buffer (U1) with an output storage capacitor (C2) for storing a control voltage for the control transistor (M1), wherein a positive input of the buffer is adapted to receive the current setting control signal and a negative input of the buffer is connected to a second current sensing component (R2) in the current path for sensing the current therethrough.

10. The converter of any one of claims 1 to 9, wherein the energy storage component (L1) comprises an inductor.

11. The converter of claim 10, comprising a high-side switch buck converter wherein the inductor (L1) is in series with the current sensing resistor (Rs) between the main switch (Q1) and one of the output terminals (LED+), and the current sensing resistor (Rs) is adapted to detect a peak current flowing through the inductor (L1) in a charging phase of the buck converter.

12. The converter of claim 10, comprising a high-side switch buck-boost converter.

13. The converter of claim 12, wherein the inductor (L1) is coupled to the main power switch (Q1) and the reference voltage potential, a positive output terminal is coupled to the reference voltage potential, a negative output terminal is coupled to the main power switch via the current sensing resistor (Rs), wherein the current sensing resistor (Rs) is adapted to detect a freewheeling current flowing to the load in a freewheeling phase of the buck-boost converter.

14. A non-isolated LED driver comprising:
a boost converter; and
a high-side switch converter of any one of claims 11 to 13 cascaded to the boost converter.

15. A lighting unit comprising:
a non-isolated LED driver of claim 14; and
a LED arrangement connected to the pair of output terminals.

## Patentansprüche

1. Schaltmodusleistungswandler, umfassend:
ein Paar Eingangsanschlüsse (In, GND), um eine Eingangsleistung mit einem Hochspannungspotential (In) und einem Referenzspannungspotential (GND) zu empfangen;
ein Paar Ausgangsanschlüsse (LED+, LED-), um eine Ausgangsleistung bereitzustellen;
eine Energiespeicherkomponente (L1);
einen Hauptleistungsschalter (Q1), der mit dem Hochspannungspotential (In) und der Energiespeicherkomponente (L1) verbunden und angepasst ist, um die Energiespeicherkomponente abwechselnd mit dem Hochspannungspotential zu koppeln und von diesem zu entkoppeln;
einen Stromerfassungswiderstand (Rs), um einen umgewandelten Strom zu erfassen;
eine Stromeinstellschaltung (30), die einen Eingang zum Empfangen eines Stromeinstellsteuersignals, das auf das Referenzspannungspotential bezogen ist, aufweist, wobei die Stromeinstellschaltung (30) konfiguriert ist, um ein Ausgangssignal zu erzeugen, das von dem Stromeinstellsteuersignal abhängt;
einen Vorspannungswiderstand (R1), der ein erstes Ende, das mit einem Knoten (N1, N2) zwischen dem Hauptleistungsschalter (Q1) und der Energiespeicherkomponente (L1) verbunden ist, aufweist;
eine Stromquellenschaltung (40), die zwischen das zweite Ende des Vorspannungswiderstands (R1) und das Referenzspannungspotential (GND) gekoppelt ist, die konfiguriert ist, um einen Strom, der von dem Ausgangssignal der Stromeinstellschaltung (30) abhängt, durch den Vorspannungswiderstand (R1) zu dem Referenzspannungspotential (GND) zu treiben; und
eine Steuerschaltung (16), die konfiguriert ist, um eine Spannung über eine Reihenverbindung des Stromerfassungswiderstands (Rs) und des Vorspannungswiderstands (R1) zu erfassen und um den Leistungsschalter (Q1) demgemäß zu steuern, wobei die Steuerschaltung (16) einen hohen Masseanschluss (HGND) aufweist, der mit einem Niederpotentialende der Reihenverbindung verbunden ist, das dem zweiten Ende des Vorspannungswiderstands (R1) entspricht.

2. Wandler nach Anspruch 1, wobei ein Stromerfassungsanschluss (ISEN) der Steuerschaltung (16) mit einem Hochpotentialende der Reihenverbindung verbunden ist.

3. Wandler nach Anspruch 1 oder 2, wobei der Vorspannungswiderstand (R1) mit dem Verbindungspunkt zwischen dem Stromerfassungswiderstand (Rs) und der Energiespeicherkomponente (L1) verbunden ist.

4. Wandler nach einem der Ansprüche 1 bis 3, wobei einer des Paars Ausgangsanschlüsse (LED-) mit dem Referenzspannungspotential (GND) verbunden ist.

5. Wandler nach einem der Ansprüche 1 bis 4, wobei die Stromquellenschaltung (40) und der Vorspannungswiderstand (R1) einen Strompfad (R1, R3, M1) definieren, wobei die Stromquellenschaltung einen Steuertransistor (M1) zum Steuern eines Stroms in dem Strompfad umfasst, sodass der Vorspannungswiderstand (R1) angepasst ist, um eine Vorspannung proportional zu dem Strom zu erzeugen und die Vorspannung zu einer Spannung über dem Stromerfassungswiderstand (Rs) zu addieren, um eine durch die Steuerschaltung (16) zu erfassende Spannung zu ergeben, wobei die Vorspannung die Stromeinstellung darstellt und die Spannung über dem Stromerfassungswiderstand (Rs) ein Rückkopplungssteuersignal ist.

6. Wandler nach Anspruch 5, wobei der Vorspannungswiderstand (R1) mit einem Knoten verbunden ist, der mit der Hochpotentialspannung, jedoch mit einer variablen Spannungsamplitude, gekoppelt ist, und die Stromquellenschaltung (40) ein Tiefpassfilter (R3, C1) umfasst, das mit einem Stromflusseintrittsanschluss des Steuertransistors (M1) verbunden ist, um eine Spannungsamplitude des Steuertransistors zu stabilisieren.

7. Wandler nach Anspruch 5 oder 6, wobei:
der Steuertransistor einen Hochspannungsschalter umfasst, oder
der Strompfad ferner eine Spannungsschwellenkomponente (Z1) umfasst und der Steuertransistor einen Niederspannungsschalter relativ zu dem Hochspannungsschalter umfasst.

8. Wandler nach Anspruch 7, wobei die Spannungsschwellenkomponente eine Zenerdiode (Z1) umfasst und der Steuertransistor ein Niederspannungs-MOSEFET als der Niederspannungsschalter ist.

9. Wandler nach einem der Ansprüche 5 bis 8, wobei die Stromeinstellschaltung einen Puffer (U1) mit einem Ausgangsspeicherkondensator (C2) zum Speichern einer Steuerspannung für den Steuertransistor (M1) umfasst, wobei ein positiver Eingang des Puffers angepasst ist, um das Stromeinstellsteuersignal zu empfangen, und ein negativer Eingang des Puffers mit einer zweiten Stromerfassungskomponente (R2) in dem Strompfad zum Erfassen des Stroms dahindurch verbunden ist.

10. Wandler nach einem der Ansprüche 1 bis 9, wobei die Energiespeicherkomponente (L1) eine Induktivität umfasst.

11. Wandler nach Anspruch 10, umfassend einen Abwärtswandler mit High-Side-Schalter, wobei sich die Induktivität (L1) in Reihe mit dem Stromerfassungswiderstand (Rs) zwischen dem Hauptschalter (Q1) und einem der Ausgangsanschlüsse (LED+) befindet und der Stromerfassungswiderstand (Rs) angepasst ist, um einen Spitzenstrom, der in einer Ladephase des Abwärtswandlers durch die Induktivität (L1) hindurch fließt, zu erfassen.

12. Wandler nach Anspruch 10, umfassend einen Abwärts-Aufwärtswandler mit High-Side-Schalter.

13. Wandler nach Anspruch 12, wobei die Induktivität (L1) mit dem Hauptleistungsschalter (Q1) und dem Referenzspannungspotential gekoppelt ist, ein positiver Ausgangsanschluss mit dem Referenzspannungspotential gekoppelt ist, ein negativer Ausgangsanschluss über den Stromerfassungswiderstand (Rs) mit dem Hauptleistungsschalter gekoppelt ist, wobei der Stromerfassungswiderstand (Rs) angepasst ist, um einen Freilaufstrom, der in einer Freilaufphase des Abwärts-Aufwärtswandlers zu der Last fließt, zu erfassen.

14. Nicht isolierter LED-Treiber, umfassend:
einen Aufwärtswandler; und
einen Wandler mit High-Side-Schalter nach einem der Ansprüche 11 bis 13, der mit dem Aufwärtswandler in Kaskade geschaltet ist.

15. Beleuchtungseinheit, umfassend:
einen nicht isolierten LED-Treiber nach Anspruch 14; und
eine LED-Anordnung, die mit dem Paar Ausgangsanschlüsse verbunden ist.

## Revendications

1. Convertisseur de puissance en mode commuté comprenant :
une paire de bornes d'entrée (In, GND) pour recevoir de la puissance d'entrée avec un potentiel à haute tension (In) et un potentiel de tension de référence (GND) ;
une paire de bornes de sortie (LED+, LED-) pour fournir de la puissance de sortie ;
un composant de stockage d'énergie (L1) ;
un commutateur de puissance principal (Q1) connecté au potentiel à haute tension (In) et au composant de stockage d'énergie (L1) et conçu pour coupler et découpler en alternance le composant de stockage d'énergie par rapport au potentiel à haute tension ;
une résistance de captage de courant (Rs) pour détecter un courant converti ;
un circuit de réglage de courant (30) ayant une entrée permettant de recevoir un signal de commande de réglage de courant en référence au potentiel de tension de référence, le circuit de réglage de courant (30) étant configuré pour générer un signal de sortie qui dépend du signal de commande de réglage de courant ;
une résistance de polarisation (R1) ayant une première extrémité connectée à un nœud (N1, N2) entre le commutateur de puissance principal (Q1) et le composant de stockage d'énergie (L1) ;
un circuit de source de courant (40) couplé entre la seconde extrémité de la résistance de polarisation (R1) et le potentiel de tension de référence (GND) configuré pour piloter un courant, qui dépend du signal de sortie du circuit de réglage de courant (30), par le biais de la résistance de polarisation (R1) vers le potentiel de tension de référence (GND) ; et
un circuit de commande (16) configuré pour capter une tension à travers une connexion en série de la résistance de captage de courant (Rs) et de la résistance de polarisation (R1) et pour commander le commutateur de puissance (Q1) en conséquence, dans lequel ledit circuit de commande (16) a une borne de terre haute (HGND) connectée à une extrémité à faible potentiel de la connexion en série, qui correspond à la seconde extrémité de la résistance de polarisation (R1).

2. Convertisseur selon la revendication 1, dans lequel une borne de captage de courant (ISEN) du circuit de commande (16) est connectée à une extrémité à potentiel élevé de la connexion en série.

3. Convertisseur selon la revendication 1 ou 2, dans lequel la résistance de polarisation (R1) est connectée à la jonction entre la résistance de captage de courant (Rs) et le composant de stockage d'énergie (L1).

4. Convertisseur selon l'une quelconque des revendications 1 à 3, dans lequel l'une parmi la paire de bornes de sortie (LED-) est connectée au potentiel de tension de référence (GND).

5. Convertisseur selon l'une quelconque des revendications 1 à 4, dans lequel le circuit de source de courant (40) et la résistance de polarisation (R1) définissent un trajet de courant (R1, R3, M1), dans lequel le circuit de source de courant comprend un transistor de commande (M1) permettant de commander un courant dans le trajet de courant de telle sorte que la résistance de polarisation (R1) est conçue pour générer une tension de polarisation proportionnelle au courant et ajouter la tension de polarisation à une tension à travers la résistance de captage de courant (Rs) pour résulter en ce qu'une tension soit captée par le circuit de commande (16), dans lequel la tension de polarisation représente le réglage de courant et la tension à travers la résistance de captage de courant (Rs) est un signal de commande de rétroaction.

6. Convertisseur selon la revendication 5, dans lequel la résistance de polarisation (R1) est connectée à un nœud couplé à la tension à potentiel élevé mais avec une amplitude de tension variable, et le circuit de source de courant (40) comprend un filtre passe-bas (R3, C1) connecté à une borne de passage de courant du transistor de commande (M1) pour stabiliser une amplitude de tension du transistor de commande.

7. Convertisseur selon la revendication 5 ou 6, dans lequel :
le transistor de commande comprend un commutateur haute tension ; ou
le trajet de courant comprend en outre un composant de seuil de tension (Z1) et le transistor de commande comprend un commutateur basse tension par rapport au commutateur haute tension.

8. Convertisseur selon la revendication 7, dans lequel le composant de seuil de tension comprend une diode Zener (Z1) et le transistor de commande est un MOSEFET basse tension en guise de commutateur basse tension.

9. Convertisseur selon l'une quelconque des revendications 5 à 8, dans lequel le circuit de réglage de courant comprend un tampon (U1) avec un condensateur de stockage de sortie (C2) permettant de stocker une tension de commande pour le transistor de commande (M1), dans lequel une entrée positive du tampon est conçue pour recevoir le signal de commande de réglage de courant et une entrée négative du tampon est connectée à un second composant de détection de courant (R2) dans le trajet de courant permettant de capter le courant à travers celui-ci.

10. Convertisseur selon l'une quelconque des revendications 1 à 9, dans lequel le composant de stockage d'énergie (L1) comprend un inducteur.

11. Convertisseur selon la revendication 10, comprenant un convertisseur abaisseur de commutateur côté haut dans lequel l'inducteur (L1) est en série avec la résistance de captage de courant (Rs) entre le commutateur principal (Q1) et l'une des bornes de sortie (LED+), et la résistance de captage de courant (Rs) est conçue pour détecter un courant de crête traversant l'inducteur (L1) dans une phase de charge du convertisseur abaisseur.

12. Convertisseur selon la revendication 10, comprenant convertisseur abaisseur-élévateur de commutateur côté haut.

13. Convertisseur selon la revendication 12, dans lequel l'inducteur (L1) est couplé au commutateur de puissance principal (Q1) et au potentiel de tension de référence, une borne de sortie positive est couplée au potentiel de tension de référence, une borne de sortie négative est couplée au commutateur de puissance principal par l'intermédiaire de la résistance de captage de courant (Rs), dans lequel la résistance de captage de courant (Rs) est conçue pour détecter un courant de marche à vide circulant vers la charge dans une phase de marche à vide du convertisseur abaisseur-élévateur.

14. Pilote de DEL non isolé comprenant :
un convertisseur élévateur ; et
un convertisseur de commutateur côté haut selon l'une quelconque des revendications 11 à 13 en cascade avec le convertisseur élévateur.

15. Unité d'éclairage comprenant :
un pilote de DEL non isolé selon la revendication 14 ; et
un agencement de DEL connecté à la paire de bornes de sortie.
